# EUROPÄISCHE PATENTSCHRIFT

(11) **EP 0 324 078 B1**
(45) Veröffentlichungstag und Bekanntmachung des Hinweises auf die Patenterteilung: **14.04.1993**
(21) Anmeldenummer: 88119260.3
(22) Anmeldetag: 19.11.1988
(51) Int. Cl.: F16B 13/14

(54) **Verbunddübel**
Compound Plug
Cheville composite

(30) Priorität: 14.01.1988 DE 3800833
(43) Veröffentlichungstag der Anmeldung: 19.07.1989
(73) Patentinhaber: fischerwerke Artur Fischer GmbH & Co. KG, D-72178 Waldachtal (DE)
(72) Erfinder: Fischer, Artur, Prof. Dr. h. c., D-7244 Waldachtal 3 Tumlingen (DE); Fischer, Jörg, D-7244 Waldachtal 3 Tumlingen (DE)
(74) Vertreter: Ott, Elmar, Dipl.-Ing.

(56) Entgegenhaltungen:
- CH-A- 656 194
- DE-A- 2 602 433
- DE-B- 2 723 729
- DE-C- 2 702 591
- US-A- 4 712 957

## Beschreibung

Die Erfindung betrifft einen Verbunddübel gemäß der Gattung des Anspruches 1.

Die Befestigung eines Befestigungselementes mittels Verbundmörtel oder dgl. ist insbesondere in porösem oder brüchigem Mauerwerk oftmals erforderlich, um auch hier hohe Haltekräfte zu erzielen. Ein solches Befestigungselement, das durch Einspritzen eines Verbundmörtels oder eines entsprechenden Verbundmittels fest im Mauerwerk verankerbar ist, ist aus der DE-C-27 02 591 bekannt. Der Verbunddübel ist mit einem Schraubenkanal zur Aufnahme einer Befestigungsschraube und an seiner Außenfläche mit Sperrmitteln versehen. Ferner weist der Verbunddübel einen Schaft mit Austrittsöffnungen für in den Dübel einspritzbarem Verbundmörtel auf, wobei im Schraubenkanal zu den Austrittsöffnungen führende, den hinteren Teil des Schraubenkanals verschließende Leitflächen angeordnet sind. Diese Leitflächen leiten den einzuspritzenden Verbundmörtel auf von den Austrittsöffnungen bis zum hinteren Stirnende des Verbunddübels sich erstreckende Längsrinnen.

Mit diesem Verbunddübel wird eine Verankerung in porösem Mauerwerk bezweckt. Durch Einspritzen eines hochfesten Verbundmörtels ist der Dübel nach dem Aushärten des Mörtels in den Mörtelkern formschlüssig eingebunden. Eine Belastung des Dübels ist allerdings erst dann möglich, wenn der Verbundmörtel vollständig ausgehärtet ist. Dies kann in Abhängigkeit von der Art des Mörtels mehrere Stunden, unter Umständen gar Tage dauern. Daraus resultiert ein Montageablauf, bei dem zunächst der Verbunddübel verankert und zu einem späteren Zeitpunkt der Gegenstand befestigt wird.

Der Erfindung liegt die Aufgabe zugrunde, einen Verbunddübel zu schaffen, der eine sofortige Montage des zu befestigenden Gegenstandes zuläßt und gleichzeitig die hohen Haltewerte eines Verbunddübels in porösem Material ermöglicht.

Die Lösung dieser Aufgabe wird durch die im Anspruch 1 angegebenen Merkmale erreicht. Der Verbunddübel besitzt im vorderen Bereich seines Schaftes Austrittsöffnungen, die vom Schraubenkanal des Dübels seitlich nach außen führen.

Dieser vordere Bereich ist gegenüber dem übrigen Schraubenkanal durch Leitflächen abgeschlossen, so daß ein in den Verbunddübel eingespritzter Verbundmörtel nicht in den hinter den Leitflächen befindlichen Schraubenkanal eindringen kann. Der Verbundmörtel wird entlang den Leitflächen durch die Austrittsöffnungen nach außen geleitet und kann dort in Längsrinnen entlang dem Dübel bis zum Dübelende vordringen. Nach dem Einspritzen des Verbundmörtels werden die Leitflächen entfernt oder von der einzusetzenden Befestigungsschraube durchstoßen. Die Befestigungsschraube dringt dann in den hinteren Schraubenkanal ein, der weitgehendst von störenden Mörtelresten freigehalten ist. Geringfügige, durch die schmalen Längsschlitze in den Schraubenkanal eingedrungene Mörtelmenge wird beim Eindrehen der Befestigungsschraube verdrängt. Durch die Verengung des Schraubenkanales und den die Wandung des Dübels durchschneidenden Längsschlitzen kann der Dübel gespreizt und im Bohrloch verankert werden. Der Haltewert nach dem Verspreizen des Dübels reicht aus, das Gewicht des zu befestigenden Gegenstandes zu halten. Damit ist es möglich, die Montage vollständig durchzuführen. Nach dem Aushärten des Mörtels wird dann der Haltewert des Verbunddübels soweit gesteigert, daß die Zusatzbelastungen durch Nutzung des befestigten Gegenstandes und ggf. auch auftretende Überlastungen aufgenommen werden können.

Der Schraubenkanal besitzt im vorderen Bereich einen gegenüber dem hinteren Bereich erweiterten Durchmesser, in den ein herausnehmbarer Stöpsel eingesetzt sein kann, der als Hohlkörper ausgebildet ist und die Austrittsöffnungen und Leitflächen enthält.

Um ein falsches Einsetzen des Stöpsels zu vermeiden, können an diesem und am Dübelschaft Zentrierelemente vorgesehen sein.

Anstelle der Verwendung eines Stöpsels können auch als Spritzhäute ausgebildete Leitflächen zwischen dem vorderen und hinteren Bereich des Schraubenkanals ausgebildet sein, die beim Eindrehen der Befestigungsschrauben durchstoßen werden. In diesem Fall würde der Verbunddübel ein einstückiges Kunststoffteil darstellen.

Der Verbunddübel besitzt in der bevorzugten Ausführungsform ein den Dübelschaft umschließendes Gewebe, welches dehnbar und engmaschig ausgebildet ist. Beim Einspritzen des Verbundmörtels weicht das Gewebe nach außen aus, wobei aufgrund der engen Maschen der Verbundmörtel zwischen Gewebe und Dübelschaft gehalten wird. Ist der Dübel in einen Wabenstein oder in eine Bohrung mit seitlichen Ausbuchtungen eingesetzt, so bildet das Gewebe zusammen mit dem eingespritzten Verbundmörtel entsprechende Ausbuchtungen aus, die nach dem Aushärten eine formschlüssige Verbindung zwischen Verbunddübel und Mauerwerk herstellen.

Der Verbunddübel kann insbesondere für den Einsatz in Vollbaustoffen auch ohne ein strumpfartiges Gewebe ausgebildet sein. Es ist besonders vorteilhaft, wenn die Mantelfläche des Dübels außer Ringnuten auch eine rauhe Oberflächenstruktur aufweist. Eine derart ausgebildete Oberfläche gewährleistet eine gute Verbindung zwischen Verbundmörtel und Verbunddübel.

Die Erfindung wird nachfolgend anhand der Zeichnung näher erläutert.

Es zeigen:
- Figur 1: einen in einen Wabenstein eingesetzten Verbunddübel mit Stöpsel,
- Figur 2: den Stöpsel gemäß Figur 1 im Längsschnitt und
- Figur 3: eine Ausführung eines Verbunddübels mit einer Spritzhaut anstelle eines Stöpsels.

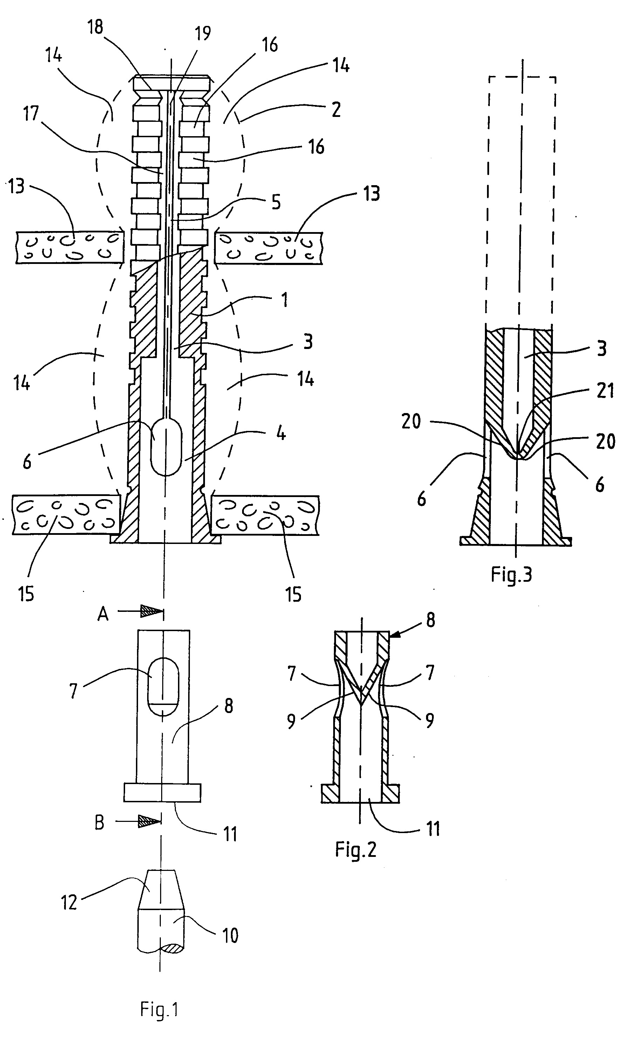

Der in Figur 1 dargestellte Verbunddübel besteht aus einem Dübelschaft 1 und einem ihn umschließenden Gewebe 2, welches hier mit unterbrochenen Linien dargestellt ist.

Der im Dübelschaft 1 verlaufende Schraubenkanal 3 ist in einen vorderen Bereich 4 mit erweitertem Durchmesser und einem hinteren Bereich 5 unterteilt. Im vorderen Bereich 4 befinden sich zwei gegenüberliegende Austrittsöffnungen 6, die mit Öffnungen 7 eines Stöpsels 8 fluchten, wenn dieser in den vorderen Bereich 4 eingesetzt ist. Der Stöpsel 8 ist als Hohlkörper ausgebildet, wie dies in Figur 2 ersichtlich ist, welche den Längsschnitt entlang der Schnittlinie AB zeigt.

Im Stöpsel 8 sind keilförmig angeordnete Leitflächen 9 ausgebildet, die zu den Öffnungen 7 hinführen. Wird nun bei eingesetztem Stöpsel 8 eine Spritzvorrichtung 10 an der Mündung 11 des Stöpsels 8 aufgesetzt, so kann über die Spritzdüse 12 der Verbundmörtel in den Hohlraum des Stöpsels 8 und von dort durch die Öffnungen 7 und die korrespondierenden Austrittsöffnungen 6 gelangen. Dabei wird das Gewebe 2 in der dargestellten Weise abschnittsweise ausgebuchtet. Nach Beendigung des Spritzvorganges wird der Stöpsel 8 entnommen und es kann sofort eine Befestigungsschraube in den Schraubenkanal 3 eingeschraubt werden. Dabei spreizt der hintere Bereich des Dübels auf, wodurch sich der Verbundübel mit den Wandabschnitten 13 verspannt. Auf diese Weise ist eine Vorbefestigung möglich.

Sobald dann der innerhalb der unterbrochenen Linien befindliche Verbundmörtel 14 ausgehärtet ist, bildet dieser eine formschlüssige Verbindung zwischen den Wandabschnitten 13 bzw. 15 und dem Dübelschaft 1.

Eine besonders gute Verbindung zwischen Verbundmörtel 14 und Dübelschaft 1 wird durch eine strukturierte und/oder aufgerauhte Dübel-Mantelfläche erreicht. Im dargestellten Ausführungsbeispiel sind hierzu mehrere Ringnuten 16 zusätzlich vorgesehen.

Von den Austrittsöffnungen 6 verlaufen Längsrinnen 17 bis zum Ende 18 des Dübelschafts 1. In den Längsrinnen 17 kann sich der eingespritzte Verbundmörtel im Innern des Bohrlochs über die gesamte Länge des Dübelschaftes 1 verteilen. Die Längsrinnen 17 besitzen einen V-förmigen Querschnitt und dienen insbesondere in engen Bohrlöchern oder in Bohrlöchern mit Verengungen einer gleichmäßigen Verbundmörtelverteilung.

Die Längsrinnen 17 weisen einen schmalen Längsspalt 19 auf, der ein ungehindertes Aufspreizen des Dübelschaftes 1 ermöglicht.

In Figur 3 ist ein Ausführungsbeispiel dargestellt, welches anstelle des Stöpsels 8 integrierte Leitflächen 20 besitzt, die als dünne Spritzhaut 21 zwischen vorderem Bereich 4 und hinterem Bereich 5 ausgebildet ist. Die Spritzhaut 21 schließt diese beiden Bereiche 4,5 vollständig ab, so daß ein von vorne in den Dübel eingespritzter Verbundmörtel durch die Austrittsöffnungen 6 nach außen geleitet wird. Im übrigen kann der Verbunddübel gemäß Figur 3 wie der in Figur 1 dargestellte Verbunddübel ausgebildet sein. Wird nun eine Befestigungsschraube von vorne in den Dübel eingesetzt, so dringt die Spitze der Befestigungsschraube durch die Spritzhaut 21. Die Spritzhaut 21 wird durchstoßen und die Befestigungsschraube kann damit in den engeren Abschnitt des Schraubenkanals 3 eindringen.

## Patentansprüche

1. Verbunddübel mit an seiner Außenfläche angeordneten Sperrmitteln und einem Schraubenkanal zur Aufnahme einer Befestigungsschraube, sowie einem Schaft mit Austrittsöffnungen für in den Verbunddübel einspritzbarem Verbundmörtel, wobei im Schraubenkanal zu den Austrittsöffnungen führende, den hinteren Teil des Schraubenkanals verschließende Leitflächen angeordnet sind, die den einzuspritzenden Verbundmörtel auf von den Austrittsöffnungen bis zum hinteren Stirnende des Verbunddübels sich ersteckende Längsrinnen leitet, **dadurch gekennzeichnet,** daß die Längsrinnen (17) die Wandung des Verbunddübels vollständig durchtrennen und am Rinnengrund einen Schlitz (19) bilden, und daß der Schraubenkanal (3) im hinteren Teil (5) zur Bildung eines aufweitbaren Spreizbereichs verengt ist.

2. Verbunddübel nach Anspruch 1, **dadurch gekennzeichnet,** daß die Leitflächen (9, 20) keilförmig zu den seitlichen Austrittsöffnungen (6) verlaufend ausgebildet sind.

3. Verbunddübel nach Anspruch 1, **dadurch gekennzeichnet,** daß sich die Leitflächen (9) an einem Stöpsel (8) befinden, der als Hohlkörper ausgebildet ist und mit den Austrittsöffnungen (6) fluchtende Öffnungen (7) aufweist.

4. Verbunddübel nach Anspruch 3, **dadurch gekennzeichnet,** daß am Stöpsel (8) und am Verbunddübel korrospondierende Zentrierelemente vorgesehen sind.

5. Verbunddübel nach Anspruch 1, **dadurch gekennzeichnet,** daß die Leitflächen (20) von einer dünnen Spritzhaut (21) gebildet sind.

6. Verbunddübel nach Anspruch 1, **dadurch gekennzeichnet,** daß der Dübelschaft (1) von einem dehnbaren, engmaschigen Gewebe (2) überzogen ist, das an seinen beiden Enden fest mit dem Verbunddübel verbunden ist.

## Claims

1. Combination plug having locking means arranged on its outer surface and a screw channel for accommodating a fastening screw, and a shaft having outlet openings for mortar injected into the combination plug, there being arranged in the screw channel guide surfaces leading to the outlet openings and closing off the back region of the screw channel, which guide surfaces guide the mortar to be injected onto longitudinal grooves extending from the outlet openings to the back end face of the combination plug, characterised in that the longitudinal grooves (17) penetrate right through the wall of the combination plug and form a slit (19) at their base, and that the screw channel (3) is of reduced diameter in its back region (5) in order to form an expansible region that can be expanded.

2. Combination plug according to claim 1, characterised in that the guide surfaces (9, 20) extend in a wedge-shape to the lateral outlet openings (6).

3. Combination plug according to claim 1, characterised in that the guide surfaces (9) are arranged on a stopper (8) in the form of a hollow member and having openings (7) in alignment with the outlet openings (6).

4. Combination plug according to claim 3, characterised in that corresponding centering elements are provided on the stopper (8) and on the combination plug.

5. Combination plug according to claim 1, characterised in that the guide surfaces (20) are formed by a thin injection-moulded web (21).

6. Combination plug according to claim 1, characterised in that the plug shaft (1) is covered with an expansible, narrow-meshed fabric (2) which is firmly connected at both ends to the combination plug.

## Revendications

1. Cheville composite comportant des moyens de blocage disposés sur sa surface extérieure et un passage pour vis destiné à recevoir une vis de fixation, ainsi qu'un fût comportant des orifices de sortie destinés à du mortier composite susceptible d'être injecté dans la cheville composite, des surfaces de guidage conduisant aux orifices de sortie et fermant la partie arrière du passage pour vis étant disposées dans le passage pour vis, lesquelles surfaces de guidage guident le mortier composite qu'il s'agit d'injecter sur des rainures longitudinales qui s'étendent à partir des orifices de sortie jusqu'à l'extrémité frontale arrière de la cheville composite, cheville caractérisée en ce que les rainures longitudinales (17) traversent complètement la paroi de la cheville composite et forment une fente (19) au fond des rainures et en ce que le passage (3) pour vis est rétréci dans sa partie arrière (5) en vue de réaliser une zone d'expansion susceptible d'être élargie.

2. Cheville composite selon la revendication 1, caractérisée en ce que les surfaces de guidage (9, 20) ont une forme de coin dirigé vers les orifices de sortie (6).

3. Cheville composite selon la revendication 1, caractérisée en ce que les surfaces de guidage (9) se trouvent sur un bouchon (8), qui a une conformation de corps creux et qui présente des orifices (7) en alignement avec les orifices de sortie (6).

4. Cheville composite selon la revendication 3, caractérisée en ce que, sur le bouchon (8) et sur la cheville composite, sont prévus des éléments de centrage qui correspondent entre eux.

5. Cheville composite selon la revendication 1, caractérisée en ce que les surfaces de guidage (20) sont formées par une toile d'injection mince (21).

6. Cheville composite selon la revendication 1, caractérisée en ce que le fût (1) de cheville est recouvert par un tissu (2) extensible à mailles serrées, qui est relié solidement à la cheville composite à ses deux extrémités.
